# EUROPEAN PATENT APPLICATION

(11) **EP 3 058 827 A1**
(43) Date of publication of application: **24.08.2016**
(21) Application number: 16000382.8
(22) Date of filing: 16.02.2016
(51) Int. Cl.: A21C 9/06

(54) **TABLET FOR RAVIOLI**

(30) Priority: 17.02.2015 IT UB20154919 U
(71) Applicant: Marcato S.p.A., 35011 Campodarsego (PD) (IT)
(72) Inventor: Marcato, Pietro, 35011 Campodarsego PD (IT)

(57) **Abstract**

This is a tablet for ravioli composed of two elements: a base element and a perforated rack, which elements, when used together allow you to easily and quickly make a series of ravioli, and just as easily and quickly detach them from the tablet for ravioli.

## Description

The object of this invention is a tablet for ravioli which innovates the system of the creation of ravioli using a mould.

### Prior art

The method of making ravioli using a suitable mould is well known.

Said mould configured as a matrix next to hollows on a moulded or die-cast laminar element is normally made as a small metallic shelf.

Said hollows are divided by a raised zig-zag edge to configure the product obtained in a characteristic manner: a small square of pasta with jagged edges.

The standard obligatory operating instructions for said mould are:
- dusting the whole mould with flour for every single operation;
- placing a sheet of dough to cover the entire width of the mould;
- pressing the desired filling lightly into the hollows;
- covering with another sheet of dough that previously placed on the mould;
- passing over with the rolling pin over the entire sheet lying above the mould;
- turning over the mould and detaching the ravioli.

These operations for making ravioli with a mould have remained unchanged for a very long time.

Not even the mould has been the subject of development or renewal.

The main drawback of said method primarily concerns the ravioli detachment stage, which is connected to the first and fundamental requirement, namely dusting with flour.

In fact, every operator knows well that the two conflicting requirements need to be reconciled.

Any excess flour on the outside of the finished product tends to go into the cooking water, and in the case of a product in broth, this makes the taste floury and look cloudy.

On the other hand, not dusting the mould sufficiently is likely to substantially affect the result, making it almost impossible to detach the ravioli intact.

Quite often, in order to detach the freshly made ravioli using the rolling pin on the mould, not just banging the mould vigorously on the work table, but also using any other unrelated and sharp tools to force the ravioli to leave its housing. It is clear that however you proceed, this aspect of detachment is a problem that has not yet been solved.

Another drawback of the prior art concerns the difficulty of cleaning the mould.

In fact, since said shelf with closed recesses, having numerous points that are difficult to reach, after the ravioli formation operations are finished, much time must be employed and dedicated just to the cleaning of the mould, to leave no processing residues, pasta dough and/or filling on the mould, which would make it unhygienic, unsightly and with the certainty that it will give off bad smells.

A further difficulty encountered with the use of this mould, which is traditionally made with the support points under the mould itself, consists of the making of the ravioli adjacent to the narrow edge.

In fact, once the rolling pin has passed the last raised edge, it is no longer supported.

This means that the operator at each pass of the rolling pin tends to reduce the amount of force applied to the ends in order not to have the rolling pin suddenly drop onto the work table.

A further reason, why the operator tends to reduce the pressure near these narrow edges is the fact that traditionally the raised zig-zag end overhangs the support, below the mould, on the table.

For this type of structure, then, the same mould having force exerted on it by the rolling pin, in the manner described above, tends to lift up from the side opposite to that where the pressure is applied and to fall violently on the work table.

For these reasons the operator, when getting close to the narrow edges, slows down the rolling movement of the rolling pin, exerting less pressure.

Such an operating mode therefore tends to reduce productivity and makes the definition of the cutting edge of the end ravioli less certain.

Finally it should be noted that the current mould, which does not extend significantly and sufficiently over the beaded zig-zag edge towards the narrow side, forces the operator, in order to the detach and release the ravioli (as long as there has been a generous dusting of flour beforehand below the first sheet lying on the mould,) to place their hands on top of some ravioli in order to grip and turn the mould itself upside down.

Even if this manoeuvre does not have any heath or hygiene risks if it is the same user carrying out the work, some ravioli however will be deformed and/or damaged.

### Objects of the invention

The objects of the invention are, therefore, those of overcoming the drawbacks of the prior art, constituted by all the limitations and drawbacks of the current ravioli mould.

In particular, the object of the invention is to make available an alternative mould for ravioli that does not require an abundant dusting of flour of the underlying first sheet of pasta to ensure the subsequent detachment of the ravioli that has just been formed.

A further purpose of the object of the invention is to make available an alternative mould for ravioli that allows the ravioli just formed to be detached in a whole and fully formed manner.

A different object of the invention the object is to make available an alternative mould for ravioli that does not need to be gripped and turned upside down in its entirety in order to detach the individual ravioli just formed.

An important purpose of the object of the invention is to make available an alternative mould for ravioli that is easy to clean both over its entire surface and in the small gaps.

A significant purpose of the object of the invention is to make available an alternative mould for ravioli that would facilitate the creation and definition of the outline of all the ravioli, in particular and especially those adjacent to the edge itself

A remarkable purpose of the object of the invention is to make available an alternative mould for ravioli where the rolling pin once it has passed the last edge for the perimeter cut is further supported.

A significant purpose of the object of the invention is to make an alternative mould for ravioli where the rolling pin can be handled without any risk that the underlying structure can, from the opposite side to the point of pressure, lift up and abruptly fall back on the work table.

Yet another purpose of the object of the invention is to make available an alternative mould for ravioli equipped with a grip to avoid operators having to position their/her hands on top of the newly made ravioli when handling the mould.

### Explanation of the invention

All the aforesaid objects are achieved by a tablet for ravioli as set forth in the appended claims.

Also other objects, in addition to those above, which will be better explained in the following description, are obtained by a tablet for ravioli composed of at least two superimposed element, a first lower element which constitutes the support base, which on its upper surface has a series of concave shapes spaced apart from one another, and a second element, arranged above the first, composed of a perforated rack with a series of holes corresponding to the underlying concave shapes, where said holes are surrounded by a cutting profile, which establishes the outline profile of the ravioli and on which cutting profile, the rolling pin passes over, with the base pasta interposed, which receives the pasta dough and the covering pasta.

### Advantageous features of the invention

Advantageously, said support base has support feet for resting on the work surface that are at least partially outside the footprint of the ravioli that will be created upon it, thereby preventing the pressure of the rolling pin in any way raising the support base itself.

Very usefully said support feet are made of a material that prevents it sliding on the work surface, ensuring the stability of the support base against any slipping due to the stresses exercised during the work.

Said concave shapes, which provide the space for the housing of the warping of the sheet for the filling, are smooth, possibly machined in a mirror-like manner, preferably a hemispherical shape, thus preventing there being even the slightest possibility that dough might stick, even if prepared beforehand with very little, or no, previous dusting with flour.

Said concave forms are also advantageously raised above the support base with a height comparable to the thickness of the perforated rack, being able with its tapered top edge to arrive against the edge of the holes of the perforated rack and form a continuity with this rack without steps on the surfaces on which each ravioli is formed, and thereby avoiding the risk that the sheet of dough could stick.

Furthermore, said support base is profiled with a series of stops and strikers for the precise and solid retention on it of the overlying perforated rack, giving the whole a structure with complementary shapes, resistant to the stresses of the rolling pin.

Advantageously, the top rack, equipped with holes arranged in line with the underlying concave shapes, is composed of a polycarbonate food profile, from which the sheet of pasta easily detaches.

Each of said holes is surrounded by the cutting profile, generally and traditionally a zigzag, on which the rolling pin rolls to seal the filling interposed between the two sheets.

The surface between said cutting profile and the corresponding holes is slightly lowered and can be practically at the same level as the upper edge of the concave shapes.

On this surface the support of the ravioli occurs, even when following the various passes of the rolling pin, the same rack is raised, detaching from the underlying support base that remains on the work table.

The detachment, then, of the ravioli on the raised rack and at a distance from the support base, is an easy procedure: it is sufficient that it is overturned with a fast 180° rotation.

The ravioli, in fact, are simply supported on the surfaces between the cutting profile and perforations, so the weight itself of the ravioli facilitates the separation from the rack.

In the event that it might not detach,. the operator can manually force this detachment acting on the free part of the ravioli protruding through the holes, these being free and available from the opposite side of the rack, the one that was in juxtaposition to the underlying support base.

This operation, therefore, is quick and easy to carry out.

So that drawback of the prior art (the detachment of the ravioli from the mould) is easily overcome because of the division of the structure itself into two parts of the ravioli tablet.

But in addition to the above-mentioned object, we can see that the rack extends beyond the last cutting profile of the narrow edge (with no possibility for the underlying support base to lift up, due to the external provision of the underlying support feet) facilitating the creation without ravioli also adjacent to the narrow edges.

And this extension the profile of the cutting edge, in a continuous longitudinal direction in a degraded manner on the part of the rack protruding from the support base, providing the operator an indication of the end of the extension which requires the inversion of the direction of the rolling of the rolling pin.

These extensions advantageously take the form of convenient handles for gripping and handling said rack, so the operator does not have to place his hand on top of the ravioli that has just been formed.

These and other advantages, which will become more apparent from the description which follows with reference to an exemplary and non-limiting embodiment, are achieved by the improved pasta cutter that is the object of this invention according to the appended claims.

### Brief description, of the drawings

The technical characteristics of the invention, according to the aforesaid aims, are clearly noted in the content of the claims reported below, and its advantages will become more readily apparent in the detailed description that follows, made with reference to the accompanying drawings, which illustrate a preferred embodiment, purely exemplary and not limiting, in which:

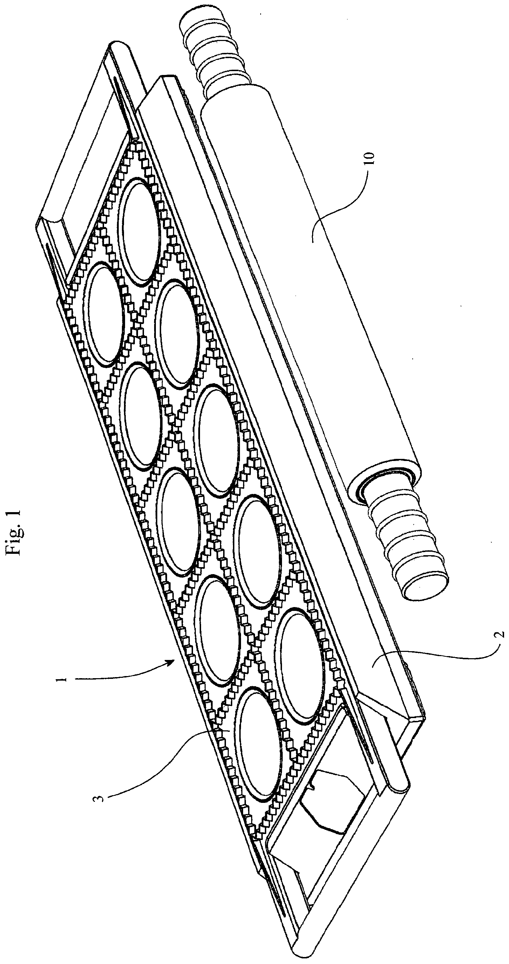

Fig. 1 shows the whole ravioli tablet with its rolling pin to flatten the dough and cut it on its cutting edges.

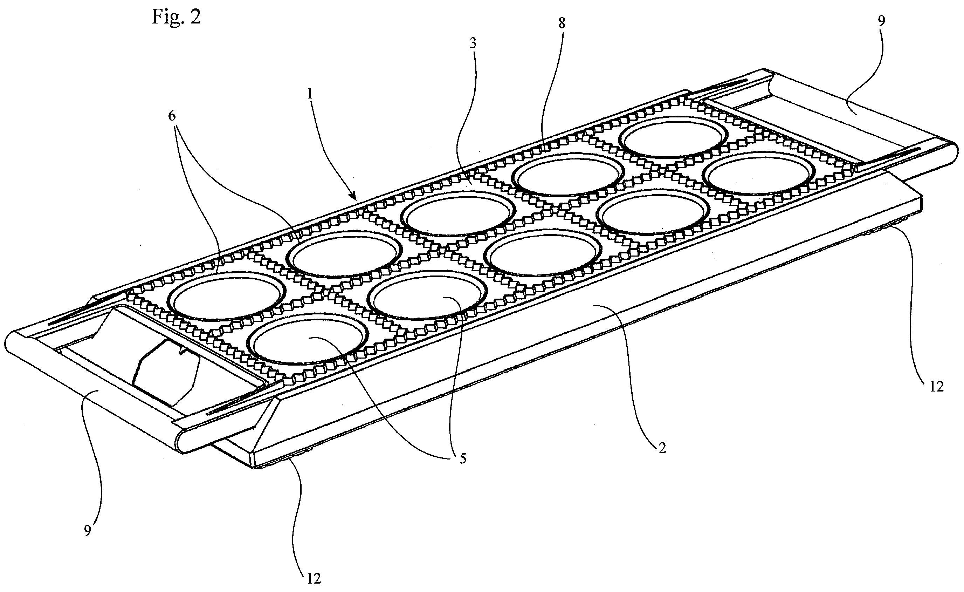

Fig. 2 shows the invention according to a perspective view consisting of a tablet for ravioli composed of the support base and the overlying perforated rack.

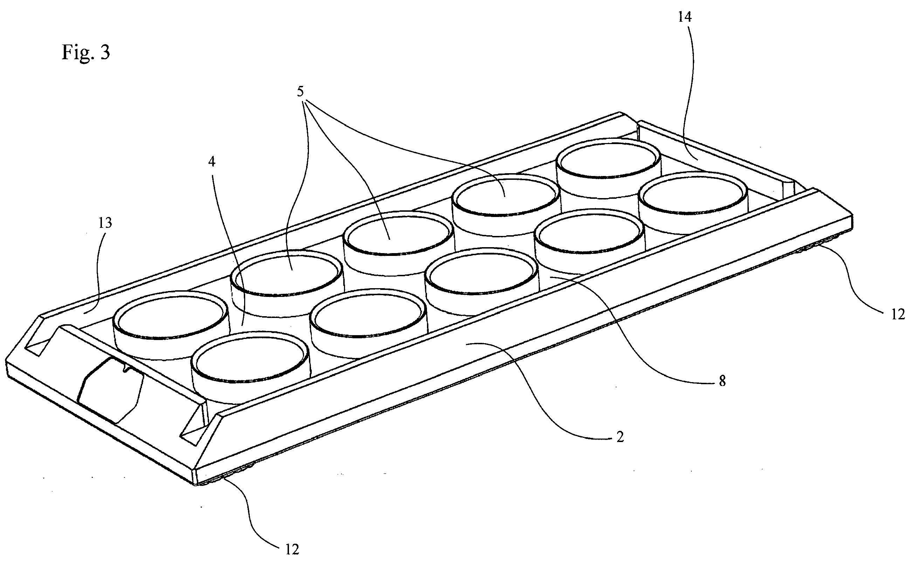

Fig. 3 shows only the support base.

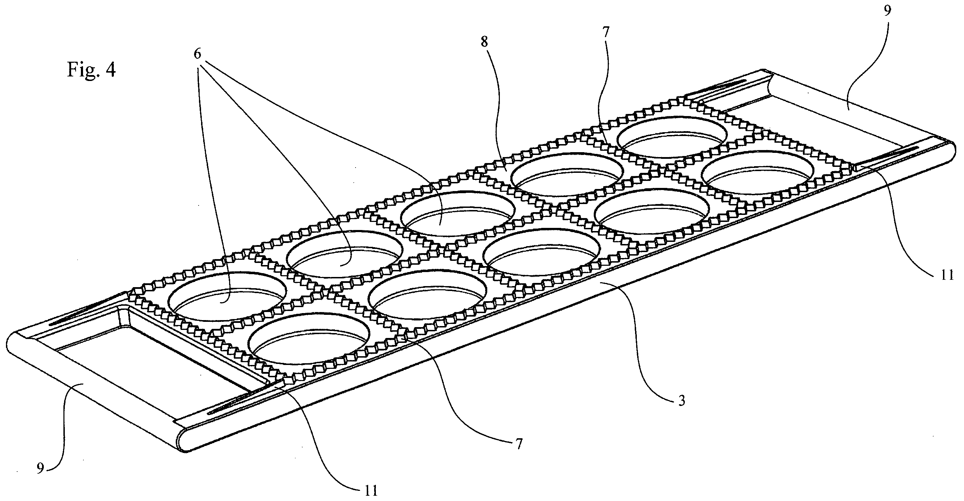

Fig. 4 shows only the perforated rack.

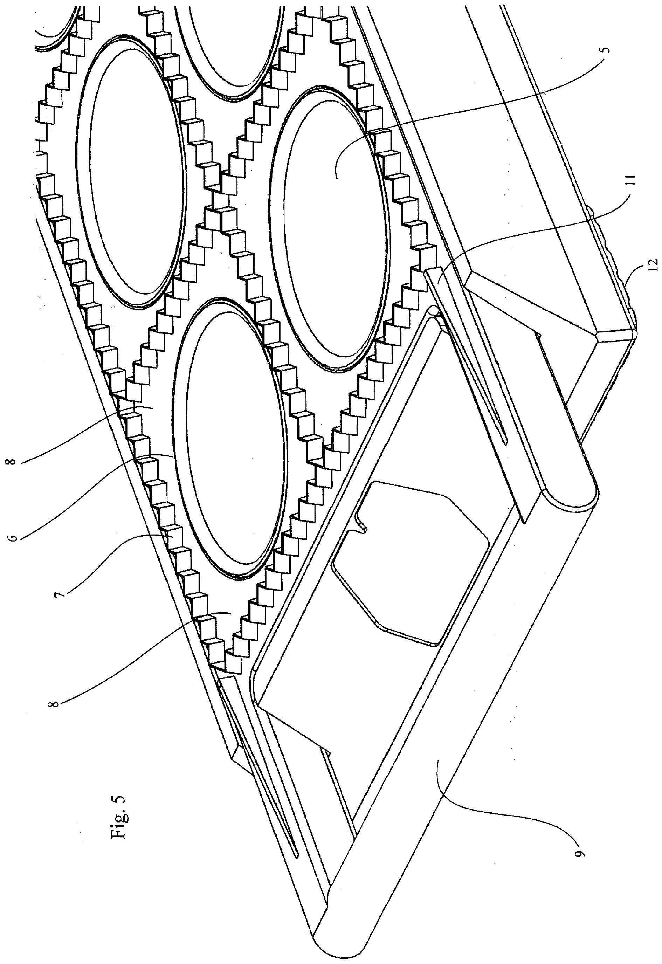

Fig. 5 shows an enlarged detail of the whole of the ravioli tablet.

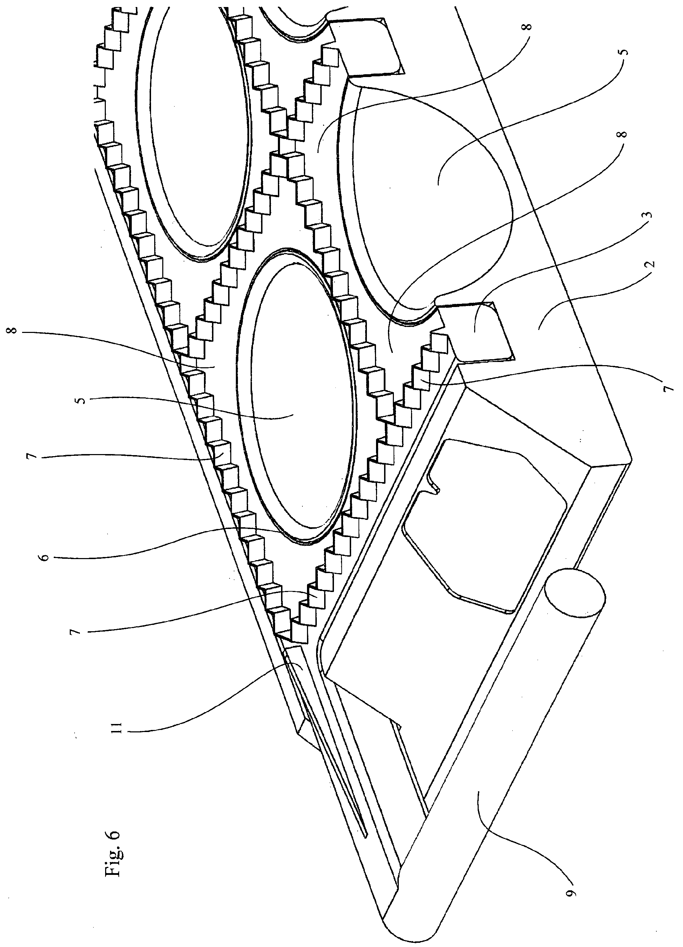

Fig. 6 shows a vertical section of what is show above in Fig. 5.

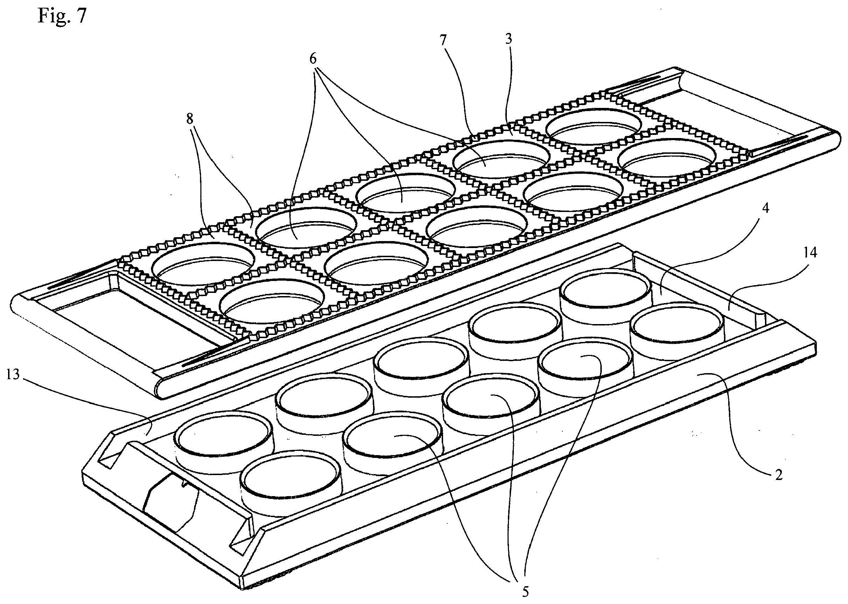

Fig. 7 shows the perforated rack raised and at a distance from the support base.

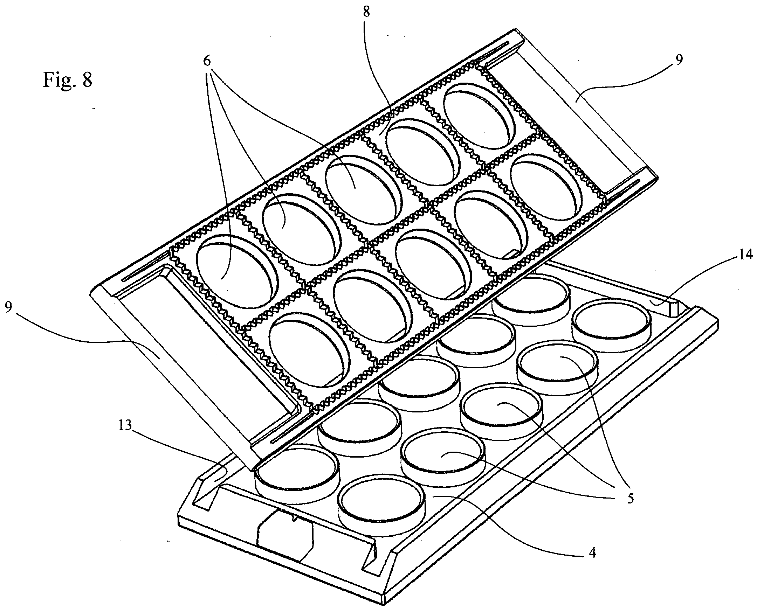

Fig. 8 shows the initial upside down rotation of 180° of the perforated rack to proceed with the detachment of the ravioli.

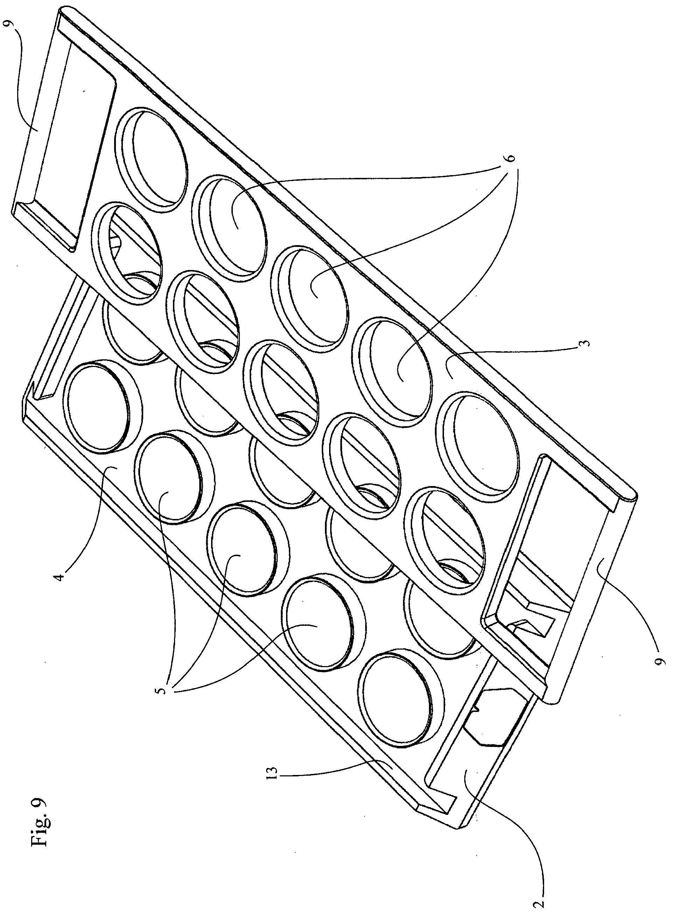

Fig. 9 shows the final upside down rotation of the perforated rack, which exposes the open holes through which the ravioli can be forced for the detachment from the perforated rack.

### Detailed description of an example of a preferred embodiment

With reference to the drawings the ravioli tablet 1 is composed of two elements: a first lower element configured as a support base 2, and a second element configured as perforated rack 3 which is joined at the top to the support base 2.

On the upper surface 4 of said support base 2 there are a series of concave shapes 5 spaced apart from each other; said concave shapes 5 are raised up from the upper surface 4 and are intended to provide the space for accommodating the processing of the sheet of pasta where there is the filling for the ravioli.

There are numerous expedients to facilitate the detachment of the ravioli from the tablet 1.

Some of these relate to said concave 5 recesses, which are devoid of sharp edges, mirror-like and with a hemispherical shape.

Already these first features prevent, or at least greatly limit the pasta from adhering to these surfaces, thereby preventing the need for them to be heavily dusted with flour.

As has been stated, above said support base 2 there is a perforated rack 3.

The through-holes 6 of this perforated rack are arranged to match the underlying concave hollows 5, allowing the dough above the perforated rack 3 to be worked, passing through said through-holes 6 and reach the underlying concave hollows 5.

Said through-holes 6 with the concave forms 5 establish a continuous surface without any appreciable discontinuities that could create areas where the pasta could possibly adhere.

One way for achieving this continuity, as shown in the drawings is obtained with the concave shapes whose upper tapered edges arrive at the same position at the top profile of the rack holes.

Each of the holes of the through-holes 6 is surrounded by the raised cutting profile 7. Tradition has it that this cutting profile 7 is configured as a zig-zag. Between said cutting profile 7 and the perimeter of the through-holes 7 there is a support surface 8.

Said support surface 8 is therefore lowered with respect to the cutting profile 7 and is practically at the same height as the upper edge of the concave forms 5. Said support surface 8 supports the ravioli formed on the rack when it is raised and distanced from the support base.

However, thanks to the fact that the support does not form any adherence and by now the warped part is free from the concave shapes, the ravioli can easily be detached by overturning the rack itself with a rotation of 180°, so that it is upside down.

This movement is made easier also because of the ease of manoeuvrability of the rack 3, which has two handles 9 protruding on the narrow side.

Said handles 9 also fulfil a further important function by providing support for the rolling pin 10 beyond the last cutting profile along the narrow side.

This support allows the operator to work expeditiously, without abrupt discontinuity near the end of the work edge.

Furthermore, since said support is formed near to and a continuation of the cutting edge, by means of a connecting spoke 11, inclined and tapered, it provides a tactile sensation to the operator to reverse the movement of the rolling pin.

This overhang does not create any drawback to the cantilever lifting of the rack or to the support base, given the protruding position of the support legs 12.

Said rack is, finally, suitably retained and confined by the support base with the stop walls 13 and opposing surface 14.

## Claims

1. Ravioli tablet composed of at least two superimposed elements: a first lower element that constitutes the support base (2), which on its upper surface has a series of concave moulds (5) spaced apart from each other, and a second element, arranged above the first, composed of a perforated rack (3) with a series of holes (6) in line with the underlying concave moulds (5), where the holes (6) are surrounded by a cutting profile (7), which defines the outline profile of the ravioli and on which the cutting profile (7) the rolling pin (10) moves, being interposed the base sheet of pasta, which receives the dough and the covering sheet.

2. Ravioli tablet according to claim, 1 **characterised by** the fact that said support base (2) possesses support feet (12) resting against the work surface at least partially outside the overall dimensions of the ravioli that will be created on it, avoiding the stress of the pressure rolling pin (10) raising in some way the support base (2) itself.

3. Ravioli tablet according to the previous claim **characterised by** the fact that said support feet (12) are made of a material with considerably friction against sliding on the work surface, ensuring the stability of the support base against any slipping due to the processing.

4. Ravioli tablet according to claim 1 **characterised by** the fact that said concave moulds (5), which can provide the space for accommodating the deformation of the pasta sheet where the filling is, are smooth, possibly machined in a mirror-like manner, and preferably a hemispherical shape

5. Ravioli tablet according to claim 1 **characterised by** the fact that said concave moulds (5) are also advantageously raised with respect to the support base (2) with a height comparable to the thickness of the perforated rack (3), being able with its upper tapered edge to arrive in juxtaposition the edge of the holes (6) of the perforated rack (3) and form with this rack (5) a continuity without steps of the surfaces on which each ravioli is to be formed.

6. Ravioli tablet according to claim 1 **characterised by** the fact that said support base (2) has and/or is profiled with a series of stops and strikers for the precise and solid retention on it of the overlying perforated rack (3), giving the whole structure complementary forms, resistant to the stresses of the rolling pin (10).

7. Ravioli tablet according to claim 1 **characterised by** the fact that said upper perforated rack (3) provided with holes (6) arranged in line with the underlying concave moulds (5) is composed of a polycarbonate food-grade profile, from which the sheet of pasta easily detaches.

8. Ravioli tablet according to claim 1 **characterised by** the fact that each of said holes (6) is surrounded by the cutting profile (7), generally and traditionally shaped as a zigzag, on which rolls the rolling pin (10) to seal the filling between the two sheets of pasta.

9. Ravioli tablet according to claim 1 **characterised by** the fact that the support surface (8) between said cutting profile (7) and the corresponding holes (6) is slightly lowered and is located practically at the same level of the upper edge of the concave shapes (5).

10. Ravioli tablet according to claim 1 **characterised by** the fact that said support surface (8) is the main support of the ravioli before detachment after that the rack (3) has been raised and distanced from the support base and before said rack (3) is turned upside down with a fast rotation movement of 180°.

11. Ravioli tablet according to one or more of the preceding claims, **characterised by** the fact that the perforated rack (3) has a series of through-holes (6) through which, after it has been raised and distanced from the relative supporting base (2), it is possible take action to detach the ravioli.

12. Ravioli tablet according to one or more of the preceding claims, **characterised by** the fact that the rack (3) extends beyond the last cutting profile (7) of the narrow edge, remaining below the base support (2) in adherence to the work surface, due to the eternal provision of the underlying support feet (12).

13. Ravioli tablet according to one or more of the preceding claims, **characterised by** the fact that the extension of the perforated rack (3) beyond the cutting edge profile (7), in a longitudinal direction, continues in a degraded manner on the protruding part of the rack (3) itself with respect to the support base (2).

14. Tablet ravioli according to the previous claim, **characterised by** the fact that said extensions take the form of comfortable handles to grip and manoeuvre said perforated rack (3).
